# EUROPEAN PATENT APPLICATION

(11) **EP 4 152 453 A1**
(43) Date of publication of application: **22.03.2023**
(21) Application number: 21804699.3
(22) Date of filing: 10.05.2021
(51) Int. Cl.: H01M 10/04, H01M 10/052, H01M 10/058, H01M 50/543, H01M 50/572

(54) **SECONDARY BATTERY**

(30) Priority: 14.05.2020 JP 2020085403
(71) Applicant: Murata Manufacturing Co., Ltd., Nagaokakyo-shi, Kyoto 617-8555 (JP)
(72) Inventor: EGUCHI, Kenta, Nagaokakyo-shi, Kyoto 617-8555 (JP); AKIZUKI, Naoto, Nagaokakyo-shi, Kyoto 617-8555 (JP); MINAMISHIMA, Yasuhito, Nagaokakyo-shi, Kyoto 617-8555 (JP); OCHI, Masato, Nagaokakyo-shi, Kyoto 617-8555 (JP)
(74) Representative: Reeve, Nicholas Edward
(86) International application number: PCT/JP2021/017725
(87) International publication number: WO 2021/230206

(57) **Abstract**

A secondary battery of the present invention includes an electrode assembly, an exterior body having a housing space for housing the electrode assembly, and a positive electrode terminal exposed from the exterior body. The positive electrode terminal includes a first metal layer formed of nickel and a second metal layer formed of a metal other than nickel, the first metal layer of the positive electrode terminal is exposed from the exterior body, the first metal layer has a fixing face fixed to an inner wall of the exterior body via an insulating material, and the insulating material also abuts against a face other than the fixing face of the first metal layer.

## Description

### TECHNICAL FIELD

The present invention relates to a secondary battery. In particular, the present invention relates to a secondary battery provided with an electrode assembly including an electrode-constituting layer including a positive electrode and a negative electrode stacked with a separator interposed therebetween.

### BACKGROUND ART

Secondary batteries, which are so-called storage batteries, can be repeatedly charged and discharged and are used for various applications. For example, secondary batteries are used in mobile devices such as mobile phones, smartphones, and notebook computers.

As a secondary battery, for example, a secondary battery including an exterior body including a bottomed cylindrical metal exterior can and a sealing lid, in which an electrode assembly is housed in the exterior can, an opening of the exterior can is sealed by crimping with the sealing lid, and each of the exterior can and the sealing lid also serves as an external output terminal. However, it is difficult to reduce the volume of the sealing part formed by crimping, and there is a problem that the volume of the electrode assembly housed in the exterior body is limited.

Various proposals to this problem have been made on the structure of the external output terminal from the viewpoint of reducing unnecessary spaces by reducing the volume of the sealing part of the secondary battery to further improve the volume energy density. For example, Patent Document 1 describes a sealed-type power storage apparatus, in which an insertion hole is provided in the bottom of a bottomed cylindrical case body, and a flat plate-shaped electrode terminal member is provided on an outer surface of the bottom with a sealing member interposed between the electrode terminal member and the outer surface. Patent Document 2 describes an electrochemical cell in which a laminate member is used for an exterior body, a sealing part is provided on an outer periphery of an electrode assembly, and an electrode penetrating the laminate member is used as an external output terminal.

### PRIOR ART DOCUMENT

### PATENT DOCUMENTS

Patent Document 1: Japanese Patent Application Laid-Open No. 2019-46639
Patent Document 2: Japanese Patent No. 6284248

### SUMMARY OF THE INVENTION

### Problem to be solved by the invention

Patent Document 1 describes that a flat plate-shaped electrode terminal member formed of a nickel plate is used as a positive electrode terminal. However, when the nickel plate is used for the positive electrode terminal, there is a problem that the nickel plate corrodes as it contacts an electrolytic solution and it becomes difficult to electrically connect the nickel plate with an external device. In Patent Document 2, an aluminum plate with a nickel plate welded to a central part is used as a positive electrode terminal, and the aluminum plate is fused to the inside of the laminate member using a sealing material so that the nickel plate is exposed to the outside. In Patent Document 2, although there is a low possibility that the nickel plate directly contact an electrolytic solution, it is necessary to use the aluminum plate with a nickel plate welded to a central part, and there is a problem that the number of steps and the number of parts increase. In addition, a step of aligning the nickel plate in accordance with the through-hole of the laminate member is required, which further increases the number of steps.

An object of the present invention is to provide a secondary battery in which corrosion of an external output terminal due to contact with an electrolytic solution can in be inhibited when nickel is used for the external output terminal, the secondary battery being easier to manufacture.

### Means for solving the problem

To solve the above problem, a secondary battery of the present invention includes: an electrode assembly; an exterior body having a housing space for housing the electrode assembly; and a positive electrode terminal exposed from the exterior body, wherein the positive electrode terminal includes a first metal layer formed of nickel and a second metal layer formed of a metal other than nickel, and the first metal layer of the positive electrode terminal is exposed from the exterior body, the first metal layer has a fixing face fixed to an inner wall of the exterior body via an insulating material, and the insulating material also abuts against a face other than the fixing face of the first metal layer.

In the present disclosure, the secondary battery may be referred to as a "secondary battery of the present disclosure".

### Advantageous effect of the invention

The present invention can provide a secondary battery in which corrosion of an external output terminal due to contact with an electrolytic solution can be inhibited when nickel is used for the external output terminal, the secondary battery being easier to manufacture. Note that the effects described in the present specification are merely examples and are not limited, and additional effects may be provided.

### BRIEF EXPLANATION OF DRAWINGS

FIG. 1 is a schematic perspective view illustrating an example of a shape of a secondary battery according to a first embodiment.
FIG. 2 includes sectional views each schematically illustrating a configuration of an electrode assembly (FIG. 2(A): an electrode assembly having an unwound planarly-stacked structure, FIG. 2(B): an electrode assembly having a stacked and wound structure).
FIG. 3 is a schematic sectional view of the secondary battery illustrated in FIG. 1.
FIG. 4 is a partial enlarged schematic sectional view of FIG. 3, illustrating an example of a structure of an external output terminal.
FIG. 5 is a partial enlarged schematic sectional view illustrating an example of a structure of an external output terminal in a secondary battery according to a second embodiment.
FIG. 6 is a partial enlarged schematic sectional view illustrating an example of a structure of an external output terminal in a secondary battery according to a third embodiment.
FIG. 7 is a schematic perspective view illustrating another example of the shape of the secondary battery according to the present invention.
FIG. 8 is a schematic perspective view illustrating another example of the shape of the secondary battery according to the present invention.
FIG. 9 is a schematic perspective view illustrating another example of the shape of the secondary battery according to the present invention.

### MODE FOR CARRYING OUT THE INVENTION

Hereinafter, a secondary battery according to an embodiment of the present invention will be described with reference to the drawings and the like as necessary. Various elements in the drawings are merely shown schematically and exemplarily for the understanding of the present invention, and appearance and/or dimensional ratios and the like may be different from actual ones.

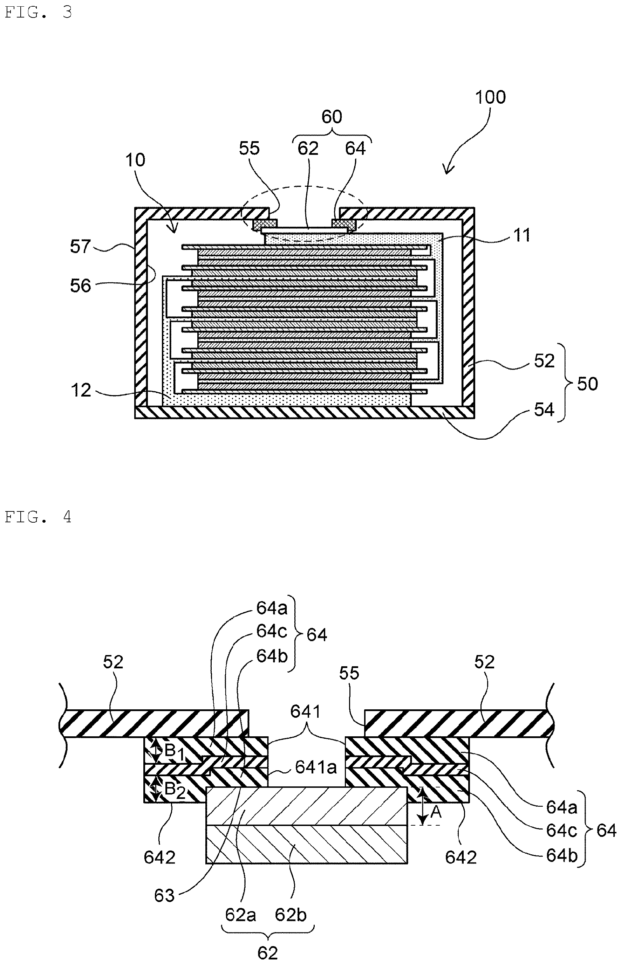

The "sectional view" described directly or indirectly in the present specification is basically based on a virtual section obtained by cutting the secondary battery along the stacking direction or the overlapping direction of the electrode assembly or the electrode-constituting layer constituting the secondary battery (see FIG. 3). The direction of the "thickness" described directly or indirectly in the present specification is basically based on the stacking direction of the electrode materials constituting the secondary battery. For example, in the case of a "secondary battery having a thickness in a plate shape" having a button shape, a coin shape, or the like, the direction of the "thickness" corresponds to the plate thickness direction of the secondary battery. The "plan view" or "plan view shape" used in the present specification is based on a sketch drawing when an object is viewed from the upper side or the lower side along the thickness direction (that is, the stacking direction).

In the present specification, "up-down directions" and "left-right directions" used directly or indirectly correspond to the up-down directions and the left-right directions in the drawings, respectively. Unless otherwise specified, the same reference numerals or symbols denote the same members or parts or the same semantic contents. In a preferred aspect, while the stacking direction of the electrode assembly may correspond to the up-down directions, it may be understood that the downward direction in the vertical direction (that is, the direction in which gravity acts) corresponds to the "downward direction" and the opposite direction corresponds to the "upward direction".

The various numerical ranges referred to herein are intended to include the lower and upper numerical values themselves, unless otherwise noted, such as "less than" or "more than/larger than".

In the present specification, "secondary battery" refers to a battery that can be repeatedly charged and discharged. Thus, the secondary battery according to an embodiment of the present invention is not excessively limited by its name, and for example, a power storage device and the like may also be included in the secondary battery. In the following description, among the secondary batteries, a nonaqueous electrolyte secondary battery, specifically, a lithium-ion secondary battery will be described as an example.

### First embodiment

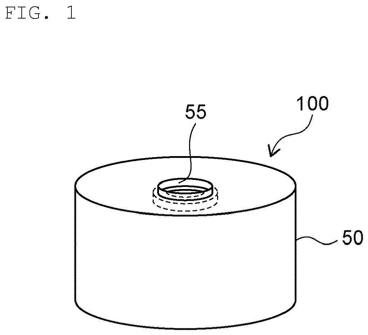

FIG. 1 is a schematic perspective view illustrating an example of a shape of a secondary battery according to a first embodiment of the present invention, illustrating an example of a button-shaped or coin-shaped secondary battery 100. The secondary battery 100 includes an electrode assembly (not illustrated), an exterior body 50 having a housing space capable of housing the electrode assembly, and a positive electrode terminal (not illustrated) exposed from the exterior body 50. The exterior body 50 has a hole 55 for an external output terminal (hereinafter, the hole is also referred to as a terminal hole). The electrode assembly has a structure in which an electrode-constituting layer including a positive electrode, a negative electrode, and a separator is stacked.

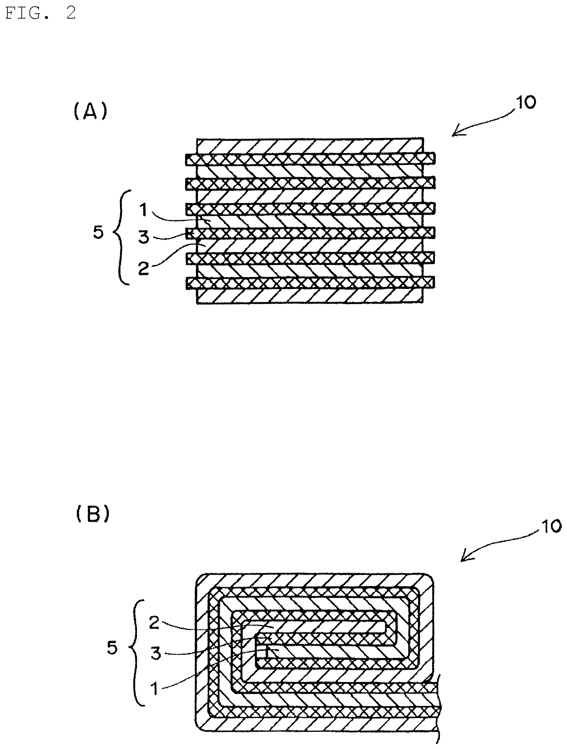

FIG. 2 is a schematic sectional view illustrating an example of a structure of the electrode assembly. The positive electrode 1 and the negative electrode 2 are stacked with the separator 3 interposed therebetween to form an electrode-constituting layer 5, and at least one or more of the electrode-constituting layers 5 may be stacked to form the electrode assembly 10.

The structure of the electrode assembly 10 may be, a planarly stacked structure in which the electrode-constituting layer 5 is stacked in a planar shape as illustrated for example in FIG. 2(A). Alternatively, the structure may be a stacked and wound structure (for example, a jelly roll structure) in which the electrode-constituting layer 5 is wound in a roll shape as illustrated for example in FIG. 2 (B).

In other words, the electrode assembly 10 may have a planarly stacked structure in which the electrode-constituting layers 5 are stacked on each other, as illustrated for example in FIG. 2(A). Alternatively, the electrode assembly 10 may have a stacked and wound structure in which the electrode-constituting layer 5 extending relatively long in a band shape is wound in a roll shape as illustrated for example in FIG. 2(B).

Note that FIG. 2 (B) merely illustrates the stacked and wound structure of the electrode assembly, and the electrode assembly may be disposed in the exterior body with the section illustrated in FIG. 2(B) facing the "upward direction" or the "downward direction".

Here, the stacked and wound structure refers to a wound structure in which an electrode-constituting layer including a positive electrode, a negative electrode, and a separator disposed between the positive electrode and the negative electrode is wound in a roll shape. In the secondary battery, such an electrode assembly may be enclosed in the exterior body together with an electrolyte (for example, a nonaqueous electrolyte). The structure of the electrode assembly is not necessarily limited to the planarly stacked structure (see FIG. 2(A)) or the stacked and wound structure (see FIG. 2(B)). For example, the electrode assembly may have a so-called stack-and-folding type structure in which a positive electrode, a separator, and a negative electrode are stacked on a long film and then folded.

FIG. 3 is a schematic sectional view of the secondary battery illustrated in FIG. 1. The secondary battery 100 includes the electrode assembly 10 housed in a housing space of the exterior body 50. The exterior body 50 may include a cup-shaped member 52 and a lid-shaped member 54 capable of sealing an opening of the cup-shaped member 52, and has an inner wall 56 and an outer wall 57. The cup-shaped member 52 may be a member having a container shape having an upper face (or a bottom or a bottom face of the cup) and a side face formed on the outer periphery of the upper face, and may have a hole 55 for exposing a first external output terminal 60 to the outside on the upper face. A first tab 11 drawn out from one of the positive electrode and the negative electrode of the electrode assembly 10 may be connected to the first external output terminal 60. A second tab 12 drawn out from the other electrode may be connected to the exterior body 50, and the exterior body 50 may also serve as a second external output terminal. The first external output terminal 60 may include, for example, a positive electrode terminal 62 and an insulating material 64, and the positive electrode terminal 62 may be fixed to the inner wall 56 of the exterior body 50 through the insulating material 64 provided around the hole 55.

FIG. 4 is a partial enlarged schematic sectional view for illustrating a structure of the first external output terminal 60 (see a part surrounded by a broken line in FIG. 3) in FIG. 3. For example, as a terminal member, the positive electrode terminal 62 may be fixed to the inner wall 56 of the exterior body 50 through the insulating material 64 around the hole 55 provided on the upper face of the cup-shaped member 52 inside the exterior body 50. The positive electrode terminal 62 may include, for example, at least two stacked metal layers that may include a first metal layer formed of a nickel layer and a second metal layer formed of a metal other than nickel. FIG. 4 illustrates an example in which the positive electrode terminal 62 is formed of two stacked metal layers, that is, a first metal layer 62a and a second metal layer 62b. The first metal layer 62a has a fixing face 63 that may be fixed to the inner wall 56 of the exterior body 50 through the insulating material 64 while being exposed from the hole 55 of the exterior body 50, and the insulating material 64 abuts against the first metal layer 62a in addition to the fixing face 63. The second metal layer 62b may be located on a face opposite to the fixing face 63 of the first metal layer 62a. Here, when the positive electrode terminal has a flat plate shape, the fixing face may be located on a flat plate face of the positive electrode terminal, and a face other than the fixing face of the positive electrode terminal may be located on a side face of the positive electrode terminal.

The external output terminal may include a metal member that may be used for connection with an external device in the secondary battery. An example in which the positive electrode terminal that may constitute the first external output terminal 60 is formed of two stacked metal layers is shown in FIG. 4, but in the present invention, it is sufficient that the positive electrode terminal include at least two stacked metal layers. The positive electrode terminal may include at least a first metal layer on the insulating material side and a second metal layer that is in contact with the first metal layer and may be located on a face opposite to the fixing face of the first metal layer or on the side opposite to the insulating material. The first metal layer may be a layer that is in contact directly with an external device. In the present invention, it is preferable to use a nickel layer as the first metal layer. The second metal layer is a layer to which a positive electrode tab drawn out from the positive electrode of the electrode assembly may be connected. For the second metal layer, a metal having a lower corrosion property than the metal (for example, nickel) of the first metal layer when a predetermined potential is applied may be used. As the second metal layer, for example, a layer containing aluminum may be used. As an example of the stacked metal layer formed of two layers, a stacked composite material of nickel and aluminum (also referred to as a clad material) may be used. In such a clad material, the thickness of the nickel layer is 100 um or more and 150 um or less, and the thickness of the aluminum layer is 100 um or more and 150 um or less. Examples of the stacked metal layers composed or three or more layers include an example in which one or more third metal layers that may be located between the first metal layer and the second metal layer are disposed, and an example in which one or more fourth metal layers that may be in contact with the second metal layer and located on the side opposite to the insulating material are disposed. In addition, a surface treatment layer having a thickness of 1 um or less may be provided at a bonding interface between the first metal layer and the insulating material. As an example, the first metal layer may be a nickel layer having a thickness of 100 um or more and 150 um or less, and the second metal layer may be an aluminum layer having a thickness of 100 um or more and 150 um or less. A case where a surface treatment material for improving the bonding force is provided at an interface between the nickel layer and the insulating material may be exemplified. The surface treatment material is, for example, a material containing chromium, and is used for the purpose of improving the bonding force at the bonding interface, and therefore the thickness thereof may be 1 um or less as described above. The formation state of the surface treatment material is not limited to a layered state, and may be a state in which the surface treatment material is sparsely distributed on the surface of the first metal layer at the bonding interface between the first metal layer and the insulating material. The shape of the positive electrode terminal is preferably a flat plate shape. The flat plate shape is a thin plate, and it may be curved or may have a part different in thickness. In the present invention, the exterior body may also serve as the second external output terminal (negative electrode terminal). Thus, stainless steel or aluminum may be used as a terminal member of the negative electrode terminal as described above.

In this embodiment, the first external output terminal is a positive electrode terminal, but the first external output terminal may be a negative electrode terminal, and the second external output terminal may be a positive electrode terminal.

The insulating material (hereinafter, also referred to as an "insulating member" or a "sealing member") is a member that is interposed between the exterior body and the terminal member and can contribute to "insulation" therebetween. The type of the insulating material is not particularly limited as long as it exhibits "insulation property". Preferably, the insulating material has not only "insulation property" but also "fusing property" (or thermal adhesiveness). In the present invention, the insulating material may be disposed to be able to fix the fixing face of the first metal layer to the inner wall of the exterior body, and may be configured to be able to abut against a face other than the fixing face of the first metal layer. As described above, when the positive electrode terminal has a flat plate shape, the fixing face may be located on a flat plate face of the positive electrode terminal, and a surface other than the fixing face of the positive electrode terminal may be located on a side face of the positive electrode terminal. Thus, when the positive electrode terminal has a flat plate shape, the insulating material may abut against a side face of the positive electrode terminal as a face other than the fixing face. For example, the insulating material may include a central part having a hole through which the positive electrode terminal may be exposed and a projection projecting toward the housing space side of the exterior body from the fixing face or the side face of the first metal layer in a sectional view, in which the projection may be configured to extend along the outer periphery of the side face of the first metal layer. Here, since the projection extends along the outer periphery of the side face of the first metal layer, the projection can cover at least a boundary between the insulating material and the first metal layer. As a result, it is possible to further inhibit corrosion of the nickel of the first metal layer at the boundary due to contact with the electrolytic solution, and moreover, it is possible to further inhibit corrosion of the first metal layer in contact with the insulating material because of the electrolytic solution entered from the boundary. The projection extends along the outer periphery of the side face of the first metal layer to cover at least the boundary between the insulating material and the first metal layer, but it may further extend along the whole outer periphery of the side face of the first metal layer, or may further extend along the whole outer periphery of the side face of the positive electrode terminal. This makes it possible to further inhibit corrosion of the nickel in the first metal layer. The projecting length (protrusion length) of the projection is not particularly limited.

As the insulating material, for example, an insulating material containing a resin material, an elastomer material, or a glass material may be used.

As the resin material, a thermoplastic resin, preferably a heat-sealable resin may be used. Examples of the thermoplastic resin, in particular, the heat-sealable resin include polyolefin-based resins such as polyethylene and/or polypropylene, preferably polypropylene and copolymers thereof. As the insulating material, for example, a single-layer film of a thermoplastic resin, preferably a heat-sealable resin, or a multilayer film containing a thermoplastic resin, preferably a heat-sealable resin may be used. Examples of the multilayer film include a multilayer thermoplastic film in which both faces of a high-melting-point resin layer to be an intermediate layer are sandwiched between low-melting-point resin layers (for example, a thermoplastic resin, preferably a heat-sealable resin layer), preferably a multilayer heat-sealable film.

Examples of the elastomer material include polyester-based thermoplastic elastomers.

Examples of the glass material include oxide glass having a low melting point, such as borate glass, silicate glass, germanate glass, vanadate glass, and phosphate glass.

The insulating material may have a film form. That is, the insulating material may have a membrane form, that is, a thin form. For example, the insulating material may be provided using a film-like insulating material precursor having a form close to the final shape.

In another perspective, the insulating material may contain a component of an insulating adhesive. Examples of such an adhesive include an acrylic-based adhesive such as an acrylic acid ester copolymer, a rubber-based adhesive such as natural rubber, a silicone-based adhesive such as silicone rubber, a urethane-based adhesive such as urethane resin, an α-olefin-based adhesive, an ether-based adhesive, an ethylene-vinyl acetate-based resin adhesive, an epoxy resin-based adhesive, a vinyl chloride resin-based adhesive, a chloroprene rubber-based adhesive, a cyanoacrylate-based adhesive, an aqueous polymer-isocyanate-based adhesive, a styrene-butadiene rubber-based adhesive, a nitrile rubber-based adhesive, a nitrocellulose-based adhesive, a reactive hot-melt-based adhesive, a phenol resin-based adhesive, a modified silicone-based adhesive, a polyamide resin-based adhesive, a polyimide-based adhesive, a polyurethane resin-based adhesive, a polyolefin resin-based adhesive, a polyvinyl acetate resin-based adhesive, a polystyrene resin solvent-based adhesive, a polyvinyl alcohol resin-based adhesive, a polyvinyl pyrrolidone resin-based adhesive, a polyvinyl butyral resin-based adhesive, a polybenzimidazole-based adhesive, a polymethacrylate resin-based adhesive, a melamine resin-based adhesive, an urea resin-based adhesive, and/or a resorcinol-based adhesive.

The plan view shape of the insulating material is not particularly limited, and may be, for example, a circular shape or a substantially circular shape, or may be a substantially rectangular shape including a substantially quadrangular shape or the like.

The insulating material preferably has an outer shape or area larger than that of the terminal member in a plan view shape thereof.

The insulating material has an opening, and its shape, size, arrangement, position, and the like are not particularly limited. The opening that may be provided in the insulating part is preferably smaller in size and area than the opening that may be provided in the exterior body.

The number of layers of the insulating material is not particularly limited as long as it is one or more, but it is preferable to have a multilayer configuration from the viewpoint of securing adhesion property and/or insulation property between the exterior material and the terminal member. For example, FIG. 4 illustrates an example in which a resin material is used as the insulating material and a three-layer multilayer film is used. The insulating material 64 illustrated in FIG. 4 is formed of a multilayer film in which two low melting point resin layers are stacked with a high-melting-point insulating resin layer interposed therebetween. That is, the first insulating layer 64a that may be disposed on the exterior material 52 side, the second insulating layer 64b that may be disposed on the positive electrode terminal 62 side, and the third insulating layer 64c that may be sandwiched between the first insulating layer 64a and the second insulating layer 64b as an intermediate layer may be included. Each of the first insulating layer 64a and the second insulating layer 64b may be a low-melting-point resin layer, and the third insulating layer 64c may be a high-melting-point resin layer. The melting point of the low-melting-point resin layer is 150°C or less, preferably 60°C or more and 150°C or less. The melting point of the high-melting-point resin layer is higher than the melting point of the low-melting-point resin layer, and is, for example, 155°C or more and 250°C or less, preferably 160°C or more and 250°C or less. Each of the first insulating layer 64a and the second insulating layer 64b is preferably a heat-sealable resin layer, and for example, as described above, a polyolefin-based resin or a copolymer thereof may be used. For the high-melting-point resin layer, for example, a polyamide-based resin such as nylon may be used. The thicknesses of the first insulating layer 64a and the second insulating layer 64b of the multilayer film used for the insulating material may be the same or different but are each 10 um or more and 100 um or less, and preferably 30 um or more and 50 um or less. The thickness of the third insulating layer 64c is 10 um or more and 100 um or less, and preferably 30 um or more and 50 um or less.

The method for forming the external output terminal is not particularly limited, and any method may be used. For example, when a heat-sealable resin is used as the insulating material, for example a positive electrode terminal is disposed around the hole provided in the exterior body with the insulating material interposed therebetween, and then the external output terminal may be formed by heat treatment. Once the insulating material is melted by the heat treatment, the positive electrode terminal may be attached to the exterior body with the insulating material. It is also possible to form the external output terminal by applying an insulating material melted in advance to the exterior body and disposing the positive electrode terminal on the applied insulating material.

A more detailed description will be given below with reference to FIG. 4. The insulating material 64 formed of, for example, a multilayer film is disposed between the cup-shaped member 52 of the exterior body 50 and the positive electrode terminal 62. In the insulating material 64, the first insulating layer 64a may be fused to the inner face of the cup-shaped member 52, and the second insulating layer 64b may be fused to the first metal layer 62a of the positive electrode terminal 62 by heat treatment. At this time, the thickness of a central part 641 of the insulating material 64 is reduced by the positive electrode terminal 62 getting stuck upward, whereas the positive electrode terminal 62 does not get stuck in a projection 642. Thus, the projection 642 can extend along the outer periphery of the side face of the first metal layer 62a of the positive electrode terminal 62 while keeping a larger thickness than the central part 641. Here, when the thickness of the first insulating layer 64a that may form the projection 642 after fusion is B1 and the thickness of the second insulating layer 64b after fusion is B2, the total thickness B (= B1 + B2) of the first insulating layer 64a and the second insulating layer 64b after fusion is preferably equal to or larger than the thickness A of the first metal layer 62a. This is because the thicknesses of the first insulating layer 64a and the second insulating layer 64b decrease because of fusion as compared with those before fusion, but when the total thickness B of the first insulating layer 64a and the second insulating layer 64b is equal to or larger than the thickness A of the first metal layer 62a after fusion, the projection 642 is more likely to cover the outer periphery of the side face of the first metal layer 62a. As a result, it is possible to further inhibit corrosion of the first metal layer 62a due to contact with the electrolytic solution. Further, by using a three-layer multilayer film including an intermediate layer formed of a high-melting-point resin, the intermediate layer does not melt at the time of fusion bonding, and therefore, it is possible to fix the positive electrode terminal to the exterior material while securing a necessary thickness as an insulating material and can prevent a short circuit between the positive electrode terminal and the exterior material that also serves as the negative electrode terminal.

Next, other members constituting the secondary battery according to the present embodiment will be described.

### [Basic configuration of secondary battery]

The positive electrode is composed of at least a positive electrode material layer and, as necessary, a positive electrode current collector. In the positive electrode, for example, a positive electrode material layer is provided on at least one face of a positive electrode current collector. The positive electrode material layer contains a positive electrode active material as an electrode active material. For example, in each of a plurality of positive electrodes in the electrode assembly, the positive electrode material layer may be provided on both faces of the positive electrode current collector, or the positive electrode material layer may be provided only on one face of the positive electrode current collector. For example, the positive electrode current collector may have a foil form. That is, the positive electrode current collector may be composed of a metal foil.

The negative electrode is composed of at least a negative electrode material layer and, as necessary, a negative electrode current collector. In the negative electrode, for example, a negative electrode material layer is provided on at least one face of a negative electrode current collector. The negative electrode material layer contains a negative electrode active material as an electrode active material. For example, in each of the plurality of negative electrodes in the electrode assembly, the negative electrode material layer may be provided on both faces of the negative electrode current collector, or the negative electrode material layer may be provided only on one face of the negative electrode current collector. For example, the negative electrode current collector may have a foil form. That is, the negative electrode current collector may be composed of a metal foil.

The electrode active materials that may be contained in the positive electrode material layer and the negative electrode material layer, that is, the positive electrode active material and the negative electrode active material are substances that may be directly involved in the transfer of electrons in the secondary battery and are main substances of the positive electrode and the negative electrode that are responsible for charging and discharging, that is, a battery reaction.

More specifically, ions may be brought into the electrolyte due to the "positive electrode active material that may be contained in the positive electrode material layer" and the "negative electrode active material that may be contained in the negative electrode material layer". Such ions move between the positive electrode and the negative electrode to transfer electrons, and charging and/or discharging may be performed.

The positive electrode material layer and the negative electrode material layer may be layers particularly capable of occluding and releasing lithium ions. That is, the secondary battery according to an embodiment of the present invention may be a nonaqueous electrolyte secondary battery in which lithium ions may move between the positive electrode and the negative electrode via a nonaqueous electrolyte interposed therebetween to charge and discharge the battery.

When lithium ions are involved in charging and discharging, the secondary battery according to an embodiment of the present invention may correspond to a so-called "lithium-ion battery". In a lithium-ion battery, a positive electrode and a negative electrode have a layer capable of occluding and releasing lithium ions.

The positive electrode active material of the positive electrode material layer may be composed of, for example, a particulate material, and a binder may be contained in the positive electrode material layer for more sufficient contact between particles and shape retention. A conductive aid may be contained in the positive electrode material layer to more smoothly transmit electrons promoting a battery reaction.

The negative electrode active material of the negative electrode material layer may be composed of, for example, a particulate material, and a binder may be contained in the negative electrode material layer for more sufficient contact between particles and shape retention. A conductive aid may be contained in the negative electrode material layer to more smoothly transmit electrons promoting a battery reaction.

Since the positive electrode material layer and the negative electrode material layer contain a plurality of components in this manner, the positive electrode material layer and the negative electrode material layer may also be referred to as "positive electrode mixture layer" and "negative electrode mixture layer", respectively.

The positive electrode active material may be, for example, a material that contributes to occlusion and release of lithium ions. From such a viewpoint, the positive electrode active material may be, for example, a lithium-containing composite oxide. More specifically, the positive electrode active material may be a lithium transition metal composite oxide containing lithium and at least one transition metal selected from the group consisting of cobalt, nickel, manganese, and iron.

That is, in the positive electrode material layer of the secondary battery according to an embodiment of the present invention, such a lithium transition metal composite oxide may be contained as a positive electrode active material. For example, the positive electrode active material may be lithium cobaltate, lithium nickelate, lithium manganate, lithium iron phosphate, or a material obtained by replacing a part of these transition metals with another metal.

Such a positive electrode active material may be contained as a single species, or two or more species may be contained in combination.

The binder that may be contained in the positive electrode material layer is not particularly limited, and examples thereof include at least one selected from the group consisting of polyvinylidene fluoride, a vinylidene fluoride-hexafluoropropylene copolymer, a vinylidene fluoride-tetrafluoroethylene copolymer, and polytetrafluoroethylene.

The conductive aid that may be contained in the positive electrode material layer is not particularly limited, and examples thereof include at least one selected from carbon blacks such as thermal black, furnace black, channel black, Ketjen black, and acetylene black, carbon fibers such as graphite, carbon nanotube, and vapor-grown carbon fiber, metal powders such as copper, nickel, aluminum, and silver, and polyphenylene derivatives.

The thickness of the positive electrode material layer is not particularly limited and may be 1 um or more and 300 um or less, and is, for example, 5 um or more and 200 um or less. The thickness of the positive electrode material layer is the thickness inside the secondary battery, and an average value of measured values at any 10 points may be adopted.

The negative electrode active material may be a material that contributes to occlusion and release of lithium ions. From such a viewpoint, the negative electrode active material may be, for example, various carbon materials, oxides, and/or lithium alloys, metallic lithium, or the like.

Examples of the various carbon materials of the negative electrode active material include graphite (specifically, natural graphite and/or artificial graphite), hard carbon, soft carbon, and/or diamond-like carbon. In particular, graphite has high electron conductivity and is excellent in adhesion to, for example, a negative electrode current collector.

Examples of the oxide of the negative electrode active material include at least one selected from the group consisting of silicon oxide, tin oxide, indium oxide, zinc oxide, lithium oxide, and the like.

Such an oxide may be amorphous as its structural form. This is because deterioration due to nonuniformity such as crystal grain boundaries or defects is less likely to occur.

The lithium alloy of the negative electrode active material may be an alloy of a metal that may be alloyed with lithium, and may be, for example, a binary, ternary, or higher alloy of lithium and a metal such as Al, Si, Pb, Sn, In, Bi, Ag, Ba, Ca, Hg, Pd, Pt, Te, Zn, or La.

Such an alloy may be amorphous as its structural form. This is because deterioration due to nonuniformity such as crystal grain boundaries or defects is less likely to occur.

The binder that may be contained in the negative electrode material layer is not particularly limited, and examples thereof include at least one selected from the group consisting of styrene butadiene rubber, polyacrylic acid, polyvinylidene fluoride, a polyimide-based resin, and a polyamideimide-based resin.

The conductive aid that may be contained in the negative electrode material layer is not particularly limited, and examples thereof include at least one selected from carbon blacks such as thermal black, furnace black, channel black, Ketjen black, and acetylene black, carbon fibers such as graphite, carbon nanotube, and vapor-grown carbon fiber, metal powders such as copper, nickel, aluminum, and silver, polyphenylene derivatives, and the like.

The thickness of the negative electrode material layer is not particularly limited and may be 1 um or more and 300 um or less, and is, for example, 5 um or more and 200 um or less. The thickness of the negative electrode material layer is the thickness inside the secondary battery, and an average value of measured values at any 10 points may be adopted.

The positive electrode current collector and the negative electrode current collector that may be used for the positive electrode and the negative electrode are members capable of collecting and supplying electrons generated in the electrode active material due to a battery reaction. Such an electrode current collector may be a sheet-like metal member. Such an electrode current collector may have a porous or perforated form. For example, the current collector may be a plate, a metal foil, a punching metal, a net, an expanded metal, or the like.

The positive electrode current collector that may be used for the positive electrode may be made of a metal foil containing at least one selected from the group consisting of aluminum, stainless steel (SUS), nickel, and the like. The positive electrode current collector may be, for example, an aluminum foil.

The negative electrode current collector that may be used for the negative electrode may be made of a metal foil containing at least one selected from the group consisting of copper, stainless steel (SUS), nickel, and the like. The negative electrode current collector may be, for example, a copper foil.

In the present disclosure, "stainless steel" (SUS) refers to, for example, stainless steel defined in "JIS G0203 Glossary of terms used in iron and steels" and may be chromium or alloy steel containing chromium and nickel.

The thickness of each of the positive electrode current collector and the negative electrode current collector is not particularly limited and may be 1 um or more and 100 um or less, and is, for example, 10 um or more and 70 um or less. The thickness of each of the positive electrode current collector and the negative electrode current collector is the thickness inside the secondary battery, and an average value of measured values at any 10 points may be adopted.

The separator that may be used for the positive electrode and the negative electrode is a member that may be provided from the viewpoint of preventing a short circuit due to contact between the positive electrode and the negative electrode, holding the electrolyte, and the like. In other words, it can be said that the separator is a member capable of allowing ions to pass while preventing electronic contact between the positive electrode and the negative electrode.

For example, the separator is a porous or microporous insulating member and may have a membrane form due to its small thickness. Although it is merely an example, a microporous membrane formed of polyolefin may be used as the separator.

The microporous membrane that may be used as the separator may contain, for example, only polyethylene (PE) or only polypropylene (PP) as polyolefin. Further, the separator may be a stacked body that may be composed of "microporous membrane made of PE" and "microporous membrane made of PP". The surface of the separator may be covered with an inorganic particle coating layer and/or an adhesive layer. The surface of the separator may have adhesiveness.

The thickness of the separator is not particularly limited and may be 1 um or more and 100 um or less, and is, for example, 2 um or more and 20 um or less. The thickness of the separator is the thickness inside the secondary battery (in particular, the thickness between the positive electrode and the negative electrode), and an average value of measured values at any 10 points may be adopted.

In the present invention, the separator should not be particularly limited by its name, and it may be a solid electrolyte, a gel electrolyte, and/or insulating inorganic particles that may have a similar function.

In the secondary battery according to an embodiment of the present invention, for example, an electrode assembly including an electrode-constituting layer including a positive electrode, a negative electrode, and a separator may be enclosed in an exterior body together with an electrolyte. The electrolyte can assist movement of metal ions released from the electrode (positive electrode and/or negative electrode). The electrolyte may be a "nonaqueous" electrolyte containing an organic electrolyte and/or an organic solvent or may be an "aqueous" electrolyte containing water.

When the positive electrode and the negative electrode have, for example, a layer capable of occluding and releasing lithium ions, the electrolyte is preferably a "nonaqueous" electrolyte (hereinafter, referred to as "nonaqueous electrolyte") containing, for example, a lithium ion-containing electrolyte or an organic electrolyte and/or an organic solvent. That is, the electrolyte is preferably a nonaqueous electrolyte. In the electrolyte, metal ions released from the electrode (positive electrode and/or negative electrode) are present, and therefore the electrolyte can assist the movement of the metal ions in the battery reaction.

The secondary battery according to an embodiment of the present invention is preferably a nonaqueous electrolyte secondary battery using a "nonaqueous" electrolyte containing a "nonaqueous" solvent and a solute as the electrolyte. The electrolyte may have a form such as a liquid form or a gel form (in the present specification, the nonaqueous electrolyte of in a "liquid form" is also referred to as "nonaqueous electrolyte solution").

The nonaqueous electrolyte is preferably an electrolyte containing a nonaqueous solvent and a solute. As a specific solvent of the nonaqueous electrolyte, a solvent containing at least a carbonate may be used. Such a carbonate may be a cyclic carbonate and/or a chain carbonate.

Although not particularly limited, examples of the cyclic carbonate include at least one selected from the group consisting of propylene carbonate (PC), ethylene carbonate (EC), butylene carbonate (BC), and vinylene carbonate (VC).

Examples of the chain carbonate include at least one selected from the group consisting of dimethyl carbonate (DMC), diethyl carbonate (DEC), ethyl methyl carbonate (EMC), and dipropyl carbonate (DPC).

Although it is merely an example, in one preferred embodiment of the present invention, a combination of a cyclic carbonate and a chain carbonate may be used as the nonaqueous electrolyte, and for example, a mixture of ethylene carbonate (EC) and diethyl carbonate (DEC), a mixture of ethylene carbonate (EC) and ethyl methyl carbonate (EMC), or the like may be used. As a specific solute of the nonaqueous electrolyte, for example, a Li salt such as LiPF₆ and/or LiBF₄ is preferably used.

### (Exterior body)

In the present disclosure, the "exterior body" generally means a member capable of enclosing or housing an electrode assembly in which an electrode-constituting layer including a positive electrode, a negative electrode, and a separator is stacked. For example, the exterior body may be a flexible case having a laminate structure or the like, or a hard case having a non-laminate structure such as a metal exterior body.

The exterior body may be a metal exterior body having a non-laminate configuration. In such a case, the exterior body is not a laminate member composed of a metal sheet, a fusion layer, and a protective layer. That is, it has a non-laminate configuration.

The metal exterior body having the non-laminate configuration may have a configuration composed of a single metal member. For example, such a metal exterior body may be a single member made of metal such as stainless steel (SUS) and/or aluminum.

The exterior body in the present disclosure may contain an alloy as a metal.

In the present disclosure, the "metal single member" means that the exterior body does not have a so-called laminate configuration in a broad sense and means that the exterior body is a member substantially composed only of metal in a narrow sense. Thus, the surface of the metal exterior body may be subjected to an appropriate surface treatment as long as the metal exterior body is substantially composed only of metal.

For example, on a cut face obtained by cutting such a metal exterior body in the thickness direction thereof, it is possible to confirm a single metal layer except for a part subjected to surface treatment or the like.

The shape, size, arrangement, position, and the like of the opening that may be provided in the exterior body are not particularly limited.

The metal exterior body may have a relatively thin thickness. For example, the metal exterior body in the present invention may have a thickness of 50 um or more and 300 um or less, for example, 75 um or more and 200 um or less, 50 um or more and 180 um or less, or 50 um or more and 170 um or less.

Using such a thin exterior body can contribute to downsizing of the secondary battery and improvement of energy density.

The exterior body may be an exterior body having electrical conductivity or conductivity and is preferably a metal exterior body. Such a metal exterior body may have a two-part configuration that may be composed of a cup-shaped member and a lid-shaped member.

In the present disclosure, the "cup-shaped member" means a member including a side face corresponding to a body and a main face (in a typical form, for example, the bottom or bottom face of the cup) continuous with the side face, having a hollow part formed inside.

In the present disclosure, the "lid-shaped member" means a member provided to cover such a cup-shaped member. The lid-shaped member may be, for example, a single member (typically a flat plate-like member) extending in the same plane. In the exterior body, the lid-shaped member and the cup-shaped member may be freely combined so that the lid-shaped member and the edge of the cup-shaped member are engaged with or coupled to or fitted to each other.

The "cup-shaped member" and the "lid-shaped member" may be joined together by a welding process, which may enable relatively simple inclusion of the electrode assembly.

In the illustrated embodiment, the "cup-shaped member" is located on the upper side, and the "lid-shaped member" is located on the lower side, but the "lid-shaped member" may be located on the upper side, and the "cup-shaped member" may be located on the lower side. In this case, the first external output terminal may be formed in the "lid-like member", and the second external output terminal may be formed in the "cup-shaped member".

### (Electrode assembly)

As the "electrode assembly", a conventionally known electrode assembly may be used, and for example, those described above may be appropriately used as necessary. For example, an electrode assembly having a planarly stacked structure in which the electrode-constituting layer 5 illustrated in FIG. 2(A) is stacked in a planar shape, an electrode assembly having a stacked and wound structure in which the electrode-constituting layer 5 illustrated in FIG. 2(B) is wound in a roll shape, or the like may be used.

### (Tab)

In the present disclosure, the "tab" means a conductive member that may be electrically connected to the positive electrode or the negative electrode of the electrode assembly, which protrudes or extends from the electrode assembly. Such a tab may be attached to the inner main face of the terminal member and may be responsible for electrical connection between the terminal member and the electrode layer of any one of the positive electrode and the negative electrode of the electrode assembly. Such a tab may extend from the "current collector" (that is, the "positive electrode current collector" and the "negative electrode current collector") described above and is preferably integrally formed with the current collector using the same material.

In the present invention, the above configuration may be appropriately changed or modified as necessary.

### [Operation and effect]

As described above, in the secondary battery according to an embodiment of the present invention, the insulating material has a projection, and the projection may extend along the outer periphery of a side face of the first metal layer 62a formed of nickel of, for example, the positive electrode terminal, so that corrosion of the first metal layer 62a due to contact with the electrolytic solution can be inhibited.

In addition, the secondary battery according to an embodiment of the present invention has, for example, a relatively simple structure in which the positive electrode terminal is fixed to the inner wall of the exterior body via the insulating material, and thus, the secondary battery is more easily produced as compared with a conventional secondary battery in which an opening of an exterior can is sealed by crimping processing with a sealing lid. The space required for sealing the positive electrode terminal is also small, which can contribute to battery downsizing and further improvement of energy density. In addition, providing the positive electrode terminal inside the exterior body is suitable when a connection part on an external device side that may be connected to the secondary battery has a protrusion, which can contribute to improvement of the degree of freedom in designing the secondary battery.

In addition, in the secondary battery according to an embodiment of the present invention, for example, a heat-sealable material may be used for the insulating material, and thus, it is possible to fix, for example, the positive electrode terminal by easily attaching it to the exterior body, and it is unnecessary to use a force large enough to deform the terminal member when sealing the positive electrode terminal. As a result, the positive electrode terminal is not subjected to pressure deformation, which can inhibit a decrease in the mechanical strength of the positive electrode terminal, and the thickness of the insulating material is not reduced or the insulating material is not broken by the positive electrode terminal subjected to pressure deformation, which can ensure insulation stability.

In the secondary battery according to an embodiment of the present invention, for example the positive electrode terminal is fixed to the inner wall of the exterior body, and the exterior body is used as the negative electrode terminal, which can reduce the number of parts of the secondary battery. As a result, it is possible to reduce the space required for the output in the cell thickness direction by half as compared with the case where the external output terminals are provided on the upper and lower faces, and thus it is possible to contribute to further improvement of the energy density.

### Second embodiment

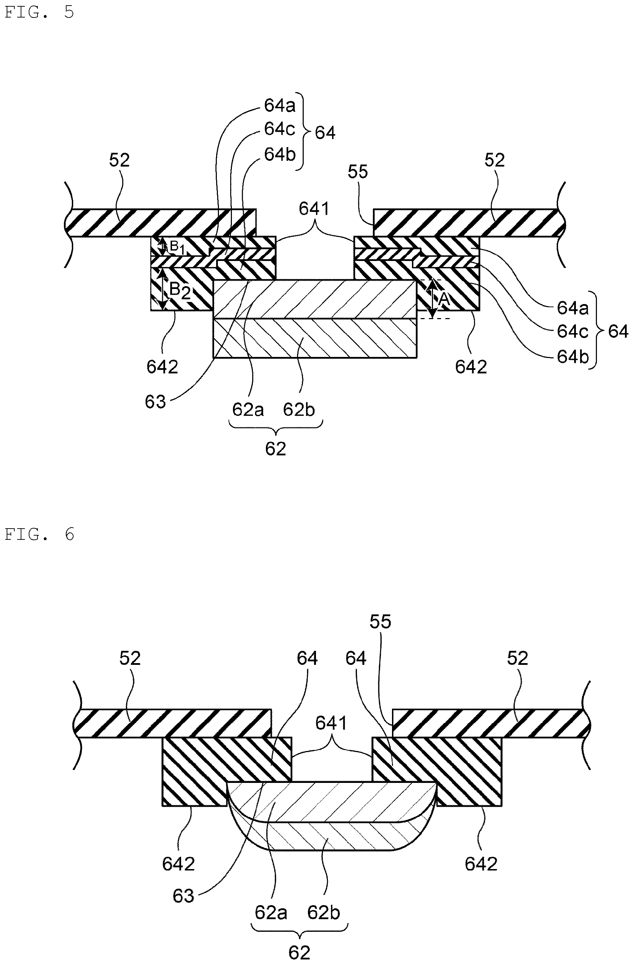

FIG. 5 is a partial enlarged schematic sectional view illustrating an example of a structure of a first external output terminal in a secondary battery according to a second embodiment of the present invention. The secondary battery according to the present embodiment may have the same configuration as that of First Embodiment, except that, for example, regarding the structure of the positive electrode terminal, the thicknesses of the first insulating layer 64a and the second insulating layer 64b of the insulating material 64 are different, and the thickness B2 of the second insulating layer 64b is equal to or larger than the thickness A of the first metal layer 62a of the positive electrode terminal. In the present embodiment, setting the thickness of the second insulating layer 64b to be equal to or larger than the thickness A of the first metal layer 62a enables the projection 642 to cover the outer periphery of the side face of the first metal layer 62a more easily. The thickness B2 of the second insulating layer 64b is equal to or larger than the thickness A of the first metal layer 62a and is preferably equal to or smaller than the thickness of the positive electrode terminal 62. The present embodiment can also achieve effects similar to those in the first embodiment.

### Third embodiment

FIG. 6 is a partial enlarged schematic sectional view illustrating an example of a structure of the first external output terminal in a secondary battery according to a second embodiment of the present invention. The same configuration as that of the first embodiment may be taken except that, for example, the outer edge of the positive electrode terminal 62 is bent in a direction away from the insulating material 64, and the insulating material 64 is not limited to the multilayer structure. The outer edge of the positive electrode terminal 62 being bent or curved in a direction away from the insulating material 64 enables the projection 642 to cover the outer periphery of the side face of the first metal layer 62a more easily. The present embodiment can also achieve effects similar to those in the first embodiment. The present embodiment may be more suitably carried out by using a positive electrode terminal produced by punching from a stacked composite material. That is, when punching is performed, the outer edge of the workpiece is bent, and it takes a bent shape such as a curved shape or a bent shape, so that so-called shear droop occurs. In the present embodiment, having the positive electrode terminal having the shear droop overlapped with the insulating material enables the projection to cover the outer periphery of the side face of the first metal layer more easily. The bent shape may be a sharp shape. The positive electrode terminal easily bites into the insulating material, and the coupling between the positive electrode terminal and the insulating material can be further improved by the anchor effect.

Although the embodiments according to an embodiment of the present invention have been described above, they are merely typical examples. Those skilled in the art will therefore easily understand that the present invention is not limited thereto and that various aspects are conceivable.

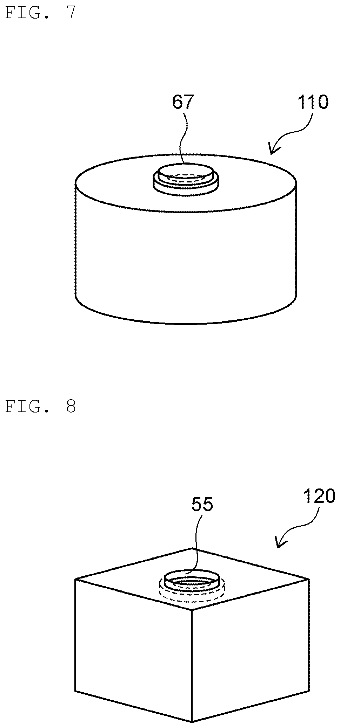

FIG. 7 is a schematic perspective view illustrating another example of the shape of a secondary battery according to another embodiment of the present invention, illustrating, for example, a shape in which a metal member 67 is further provided on the outer surface of the positive electrode terminal. Providing the metal member 67 facilitates connection of the secondary battery to an external device. The height of the metal member 67 is preferably set such that the face (or the upper face) of the metal member 67 on the electrode assembly side and the upper face (or the bottom or the bottom face of the cup) of the exterior body 50 are located on substantially the same plane. This further facilitates connection of the secondary battery to an external device. The material of the metal member 67 may be the same as or different from that of the positive electrode terminal.

The metal member 67 may be electrically connected to a terminal member such as a positive electrode terminal and may be attached to the exterior body through the same insulating material as described above.

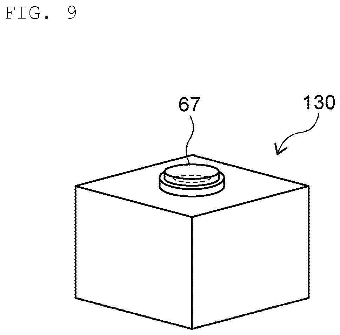

The shape of the secondary battery according to an embodiment of the present invention is not limited to a button shape or a coin shape, and other three-dimensional shapes are also possible. FIG. 8 is an example thereof, illustrating an example of a secondary battery having a so-called polygonal shape. The polygonal shape is not limited to a quadrangular shape in plan view, and other polygonal shapes are also possible. The secondary battery having a polygonal shape may also be further provided with a metal member 67 for example on the outer surface of the positive electrode terminal as illustrated in FIG. 9.

The planar view shape of the secondary battery of the present disclosure is not limited to a circular shape, a substantially circular shape, or a polygonal shape, and may have any other geometric shape. Likewise, the shapes of the terminal member and the metal member (in particular, the plan view shape) are not limited to a circular shape, a substantially circular shape, and the like, and may have any geometric shape.

The term "circular" or "substantially circular" as used herein is not limited to a perfect circular shape (that is, simply "circle" or "true circle") and includes a shape that may be usually included in "round shape" as recognized by those skilled in the art while being changed from the perfect circular shape. For example, not only a circle and a true circle but also a circle whose circular arc has a locally different curvature may be included, and furthermore, a shape derived from a circle or a true circle such as an ellipse may also be included. In a typical example, a battery having such a circular shape in plan view corresponds to a so-called button-shaped or coin-shaped battery.

In the above description, the drawings on the premise that the electrode assembly particularly has the planarly stacked structure are referred to, but the present invention is not necessarily limited to the electrode assembly having the planarly stacked structure. That is, the present invention may be premised on an electrode assembly having a wound structure as long as the electrode assembly is not characteristic of a planarly stacked structure or may be premised on an electrode assembly having a stack-and-folding type structure.

Although the embodiments of the present invention have been described above, they are merely typical examples. Those skilled in the art will therefore easily understand that the present invention is not limited thereto and that various aspects are conceivable.

### INDUSTRIAL APPLICABILITY

The secondary battery of the present disclosure can be used in various fields where power storage may be assumed. Although it is merely an example, the secondary battery of the present invention may be used in the fields of electricity, information, and communication in which electric and electronic equipment, and the like are used (for example, electric and electronic equipment fields or mobile equipment fields including mobile phones, smartphones, notebook computers, digital cameras, activity meters, arm computers, electronic paper, wearable devices, RFID tags, card-type electronic money, and smartwatches), home and small industrial applications (for example, the fields of electric tools, golf carts, and home, nursing, and industrial robots), large industrial applications (for example, fields of forklift, elevator, and harbor crane), transportation system fields (for example, the fields of hybrid vehicles, electric vehicles, buses, trains, power-assisted bicycles, electric two-wheeled vehicles, and the like), power system applications (for example, the fields of various types of power generation, road conditioners, smart grids, and household power storage systems), medical applications (medical equipment fields such as hearing aid earbuds), pharmaceutical applications (fields such as dosage management systems), IoT fields, space and deep sea applications (for example, fields such as a space probe and a submersible), and the like.

### DESCRIPTION OF REFERENCE SYMBOLS

1: Positive electrode
2: Negative electrode
3: Separator
5: Electrode-constituting layer
10: Electrode assembly
11: First tab
12: Second tab
50: Exterior body
52: Cup-shaped member
54: Lid-shaped member
55: Hole of exterior body
56: Inner wall of exterior body
57: Outer wall of exterior body
60: First external output terminal
62: Positive electrode terminal
62a: First metal layer
62b: Second metal layer
63: Fixing face
64: Insulating material
64a: First insulating layer
64b: Second insulating layer
64c: Third insulating layer
641: Central part
642: Projection
641a: Hole of insulating material
67: Metal member
100, 110, 120, 130: Secondary battery

## Claims

1. A secondary battery comprising:
an electrode assembly;
an exterior body having a housing space for housing the electrode assembly; and
a positive electrode terminal exposed from the exterior body, wherein
the positive electrode terminal includes a first metal layer formed of nickel and a second metal layer formed of a metal other than nickel, and
the first metal layer of the positive electrode terminal is exposed from the exterior body, the first metal layer has a fixing face fixed to an inner wall of the exterior body via an insulating material, and the insulating material also abuts against a face other than the fixing face of the first metal layer.

2. The secondary battery according to claim 1, wherein
the positive electrode terminal has a flat plate shape,
the fixing face of the positive electrode terminal is located on a flat plate face of the positive electrode terminal, and a face of the positive electrode terminal other than the fixing face of the first metal layer is located on a side face of the positive electrode terminal, and
the insulating material has a projection projecting toward the housing space from the fixing face or the side face of the positive electrode terminal, and the projection extends along an outer periphery of the side face of the first metal layer.

3. The secondary battery according to claim 2, wherein the projection extends along a whole outer peripheral face of the side face of the first metal layer.

4. The secondary battery according to any one of claims 1 to 3, wherein the positive electrode terminal includes the second metal layer on a face opposite to the fixing face, and the second metal layer contains aluminum.

5. The secondary battery according to any one of claims 1 to 4, wherein the insulating material is formed of a multilayer film in which two low-melting-point resin layers are stacked with a high-melting-point insulating resin layer interposed between the two low-melting-point resin layers.

6. The secondary battery according to claim 5, wherein one of the low-melting-point resin layers on the exterior body side is fused to the exterior body, and the other one of the low-melting-point resin layers located on an opposite side of the exterior body is fused to the positive electrode terminal.

7. The secondary battery according to claim 5 or 6,
wherein the two low-melting-point resin layers have a total thickness equal to or larger than a thickness of the first metal layer.

8. The secondary battery according to any one of claims 1 to 7, wherein an outer edge of the positive electrode terminal is bent in a direction away from the insulating material.

9. The secondary battery according to any of claims 1 to 8, wherein the exterior body is a metal exterior body, and the metal exterior body has a two-part configuration of a cup-shaped member and a lid-shaped member.

10. The secondary battery according to any of claims 1 to 9, wherein the secondary battery has a button shape or a coin shape.

11. The secondary battery according to any of claims 1 to 10, comprising a positive electrode and a negative electrode capable of occluding and releasing lithium ions as electrodes of the electrode assembly.
